# EUROPEAN PATENT APPLICATION

(11) **EP 4 773 280 A1**
(43) Date of publication of application: **08.07.2026**
(21) Application number: 25781428.5
(22) Date of filing: 12.03.2025
(51) Int. Cl.: H01M 10/0525, H01M 4/13

(54) **SECONDARY BATTERY AND ELECTRONIC APPARATUS**

(30) Priority: 30.03.2024 CN 202410383385
(71) Applicant: Ningde Amperex Technology Limited, Ningde City, Fujian Province 352100 (CN)
(72) Inventor: LIU, Guangcan, Ningde City, Fujian Province 352100 (CN)
(74) Representative: Kraus & Lederer PartGmbB
(86) International application number: PCT/CN2025/081999
(87) International publication number: WO 2025/209131

(57) **Abstract**

A secondary battery and an electronic device are disclosed. The secondary battery includes an electrode assembly and a tab. The electrode assembly includes a negative electrode plate. The negative electrode plate includes a negative current collector and a negative active layer disposed on at least one surface of the negative current collector. The negative current collector includes a first edge and a second edge opposite to each other in a first direction. The tab extends out of the electrode assembly through the first edge along the first direction. The negative active layer includes a first edge region provided with a plurality of first strip-shaped grooves. The first edge region covers the first edge and extends toward the second edge. In the first direction, the first edge region includes a first end portion located at the first edge and a second end portion opposite to the first end portion. At least one of the first strip-shaped grooves extends from the first end portion to the second end portion. A width of the first edge region is greater than or equal to 1 mm.

## Description

### TECHNICAL FIELD

This application relates to the technical field of batteries, and in particular, to a secondary battery and an electronic device.

### BACKGROUND

Secondary batteries (such as a lithium-ion battery) are widely applied in electric vehicles and consumer electronics by virtue of advantages such as a high energy density, a high output power, and a long cycle life. An electrode assembly is a component in which electrochemical reactions occur inside a secondary battery, and is typically formed of a positive electrode plate and a negative electrode plate that are wound or stacked together. Generally, a separator is disposed between the negative electrode plate and the positive electrode plate. During designing of the battery assembly, the negative electrode plate is usually designed in excess to extend beyond the positive electrode plate. At the edge region where the negative electrode plate exceeds the positive electrode, the current density is relatively high and the electrolyte solution is prone to concentrate, thereby resulting in a high impedance and insufficient kinetics, and being prone to lithium plating and an adverse effect on the cycle performance.

### SUMMARY

An objective of this application is to disclose a secondary battery and an electronic device that can alleviate the lithium plating in an edge region of a negative electrode plate.

A first aspect of this application provides a secondary battery. The secondary battery includes an electrode assembly and a tab. The electrode assembly includes a negative electrode plate. The negative electrode plate includes a negative current collector and a negative active layer disposed on at least one surface of the negative current collector. The negative current collector includes a first edge and a second edge opposite to each other in a first direction. The tab extends out of the electrode assembly through the first edge along the first direction. The negative active layer includes a first edge region provided with a plurality of first strip-shaped grooves. The first edge region covers the first edge and extends toward the second edge. In the first direction, the first edge region includes a first end portion located at the first edge and a second end portion opposite to the first end portion. At least one of the first strip-shaped grooves extends from the first end portion to the second end portion. A width of the first edge region is greater than or equal to 1 mm.

In the secondary battery of this application, the first strip-shaped grooves are provided in the first edge region covering the first edge of the negative current collector. At least one first strip-shaped groove extends from the first end portion of the first edge region to the second end portion. In this way, the electrolyte solution that concentrates around the first edge region flows into the negative active layer through the first strip-shaped grooves, thereby alleviating the lithium plating at the position of the first edge, and improving the cycle performance.

According to some embodiments of this application, in the first direction, the width of the first edge region is greater than or equal to 3 mm, thereby further improving the cycle performance.

According to some embodiments of this application, the negative active layer further includes a second edge region provided with a plurality of second strip-shaped grooves. In the first direction, the second edge region covers the second edge and is separate from the first edge region. The second edge region includes a third end portion located at the second edge and a fourth end portion opposite to the third end portion. At least one of the second strip-shaped grooves extends from the third end portion to the fourth end portion. A width of the second edge region is greater than or equal to 1 mm. The second strip-shaped grooves are provided in the second edge region covering the second edge of the negative current collector. At least one second strip-shaped groove extends from the third end portion of the second edge region to the fourth end portion. In this way, the electrolyte solution that concentrates around the second edge region flows into the negative active layer through the second strip-shaped grooves, thereby alleviating the lithium plating at the position of the second edge, and improving the cycle performance.

According to some embodiments of this application, in the first direction, the negative active layer further includes a main region connected between the first edge region and the second edge region. The main region is provided with a plurality of third strip-shaped grooves. Each of the third strip-shaped grooves is separate from a corresponding first strip-shaped groove and a corresponding second strip-shaped groove. With the third strip-shaped grooves provided in the main region, the lithium plating in the main region can be alleviated, thereby improving the cycle performance. In addition, the third strip-shaped grooves are separate from the first strip-shaped grooves and the second strip-shaped grooves, thereby reducing the negative electrode capacity loss, and favorably keeping the negative electrode capacity greater than the positive electrode capacity.

According to some embodiments of this application, in the first direction, the plurality of third strip-shaped grooves are divided into a plurality of groups spaced apart.

According to some embodiments of this application, the negative current collector includes a third edge and a fourth edge opposite to each other in a second direction perpendicular to the first direction. The negative active layer further includes a third edge region and a fourth edge region each provided with a plurality of fourth strip-shaped grooves. In the second direction, the third edge region covers the third edge, and the fourth edge region covers the fourth edge. The first edge region, the second edge region, the third edge region, and the fourth edge region are arranged around the main region. In a case that the electrode assembly is a stacked structure, the strip-shaped grooves provided in each edge region can alleviate the problem that the electrolyte solution concentrates around each edge region, thereby further alleviating lithium plating, and improving the cycle performance.

According to some embodiments of this application, the tab is integrally formed with the negative current collector. The first edge region includes a first region corresponding to the tab in the first direction. The first strip-shaped groove includes a first end located on a same side as the tab in the first direction. In the first direction, a distance between the first end of the first strip-shaped groove located in the first region and the first edge is 0 to 3 mm. In this way, on the one hand, the first strip-shaped groove tends to run through the negative active layer in the first direction X, thereby effectively improving the electrolyte transmission capability at the position of the first edge, and more favorably alleviating the lithium plating. On the other hand, the above arrangement reduces the risk that the etching performed during the processing of the first strip-shaped groove reaches the negative tab and results in a decline in the strength of the negative tab.

According to some embodiments of this application, the negative current collector includes a third edge and a fourth edge opposite to each other in a second direction perpendicular to the first direction. The plurality of first strip-shaped grooves are arranged from the third edge to the fourth edge.

According to some embodiments of this application, a spacing between two adjacent first strip-shaped grooves is D1, and a depth of the first strip-shaped groove is D2, satisfying: 150 µm ≤ D1 ≤ 2500 µm and/or 5 µm ≤ D2 ≤ 25 µm. When D1 < 150 µm, D1 is excessively small and results in low processability. When D1 > 2500 µm, with the area of the electrode plate being constant, the number of the first strip-shaped grooves is relatively small, the effect on improving the electrolyte transmission capability is limited, and the effect on alleviating the lithium plating is limited. When D2 < 5 µm, the depth of the first strip-shaped groove is excessively small. Therefore, during formation of the first strip-shaped groove through etching, the etching is prone to be not enough to run through, thereby impairing the transmission performance of the electrolyte solution, and impairing the cycle performance. In addition, the excessively small value of D2 produces a limited effect on improving the cycle performance. When D2 > 25 µm, the depth of the first strip-shaped groove is excessively large, the etching is prone to be excessive and make the negative electrode capacity be less than the positive electrode capacity, thereby causing lithium plating at the position of the first strip-shaped groove, and producing a limited effect on improving the cycle performance.

According to some embodiments of this application, 200 µm ≤ D1 ≤ 1000 µm, thereby further enhancing the cycle performance.

According to some embodiments of this application, the electrode assembly further includes a separator and a positive electrode plate. The separator is disposed between the negative electrode plate and the positive electrode plate. A peel strength between the separator and the positive electrode plate is greater than or equal to 3 N/m, and a peel strength between the separator and the negative electrode plate is greater than or equal to 8 N/m.

According to some embodiments of this application, the first strip-shaped groove is perpendicular or inclined to the first edge.

According to some embodiments of this application, the electrode assembly further includes a positive electrode plate. In the first direction, the width of the first edge region is greater than an excess width of the negative electrode plate over the positive electrode plate on one side in the first direction, thereby alleviating the lithium plating in the entire excess region of the negative electrode plate beyond the positive electrode plate, and improving the cycle performance.

A second aspect of this application provides an electronic device. The electronic device includes any one of the above-mentioned secondary batteries.

### BRIEF DESCRIPTION OF DRAWINGS

FIG. 1 is a schematic diagram of a secondary battery viewed along a third direction according to an embodiment of this application;
FIG. 2 is a schematic diagram of an electrode assembly viewed along a first direction according to an embodiment of this application;
FIG. 3 is a schematic diagram of a negative electrode plate and a positive electrode plate viewed along a third direction according to an embodiment of this application;
FIG. 4 is a partial cross-sectional view of the negative electrode plate shown in FIG. 3 sectioned along an A-A line;
FIG. 5 is a schematic diagram of a negative electrode plate and a positive electrode plate viewed along a third direction according to another embodiment of this application;
FIG. 6 is a schematic diagram of a negative electrode plate and a positive electrode plate viewed along a third direction according to still another embodiment of this application;
FIG. 7 is a schematic diagram of a negative electrode plate and a positive electrode plate viewed along a third direction according to still another embodiment of this application;
FIG. 8 is a schematic diagram of a negative electrode plate and a positive electrode plate viewed along a third direction according to still another embodiment of this application;
FIG. 9 is a schematic diagram of a negative electrode plate viewed along a third direction according to another embodiment of this application;
FIG. 10 is a schematic diagram of a negative electrode plate viewed along a third direction according to still another embodiment of this application;
FIG. 11 is a schematic diagram of a negative electrode plate and a positive electrode plate viewed along a third direction according to still another embodiment of this application;
FIG. 12 is a schematic diagram of a negative electrode plate viewed along a third direction according to still another embodiment of this application; and
FIG. 13 is a schematic cross-sectional view of a separator according to an embodiment of this application.

### List of reference numerals:

secondary battery 100
housing 10
electrode assembly 20
electrode terminal 30
positive tab 31
negative tab 32
positive electrode plate 21
negative electrode plate 22
separator 23
positive current collector 211
positive active layer 212
negative current collector 221
negative active layer 222
first edge region 230
main region 240
second edge region 250
third edge region260
fourth edge region 270
first strip-shaped groove 22a
second strip-shaped groove 22b
third strip-shaped groove 22c
fourth strip-shaped groove 22d
first edge 221a
second edge 221b
third edge 221c
fourth edge 221d
first end portion 231
second end portion 232
third end portion 251
fourth end portion 252
first end 22a1
second end 22a2
third end 22b1
fourth end 22b2
fifth end 22c1
sixth end 22c2
first region 23a
porous base film 233
adhesive layer 234
first direction X
second direction Y
third direction Z
fourth direction A

This application is further described below with reference to the following specific embodiments and the foregoing drawings.

### DETAILED DESCRIPTION

The following describes the technical solutions in the embodiments of this application clearly and thoroughly. Evidently, the described embodiments are merely a part of but not all of the embodiments of this application. Unless otherwise defined, all technical and scientific terms used herein bear the same meanings as what is normally understood by a person skilled in the technical field of this application. The terms used in the specification of this application are merely intended to describe specific embodiments but not to limit this application.

The following describes the embodiments of this application in detail. However, this application may be embodied in many different forms, and is in no way construed as being limited to the illustrative embodiments described herein. Rather, the illustrative embodiments are provided in order to impart this application thoroughly in detail to those skilled in the art.

In addition, for brevity and clarity, the size or thickness of various components and layers in the drawings may be scaled up. Throughout the text, the same reference numerical means the same element. As used herein, the term "and/or" includes any and all combinations of one or more related items enumerated by the term. In addition, understandably, when an element A is referred to as "connecting to" an element B, or an element A is referred to as "being connected to" an element B, the element A may be directly connected to the element B, or an intermediate element C may exist through which the element A and the element B can be connected to each other indirectly.

Further, the term "may" used in describing an embodiment of this application indicates "one or more embodiments of this application".

The technical terms used herein is intended to describe specific embodiments but not intended to limit this application. Unless otherwise expressly specified in the context, a noun used herein in the singular form includes the plural form thereof. Further, understandably, the terms "include", "comprise", and "contain" used herein mean existence of the feature, numerical value, step, operation, element and/or component under discussion, but do not preclude the existence or addition of one or more other features, numerical values, steps, operations, elements, components, and/or any combinations thereof.

Understandably, although the terms such as first, second, third may be used herein to describe various elements, components, regions, layers and/or parts, such elements, components, regions, layers and/or parts are not limited by the terms. Such terms are intended to distinguish one element, component, region, layer or part from another element, component, region, layer, or part. Therefore, a first element, a first component, a first region, a first layer, or a first part mentioned below may be referred to as a second element, a second component, a second region, a second layer, or a second part, without departing from the teachings of the illustrative embodiments.

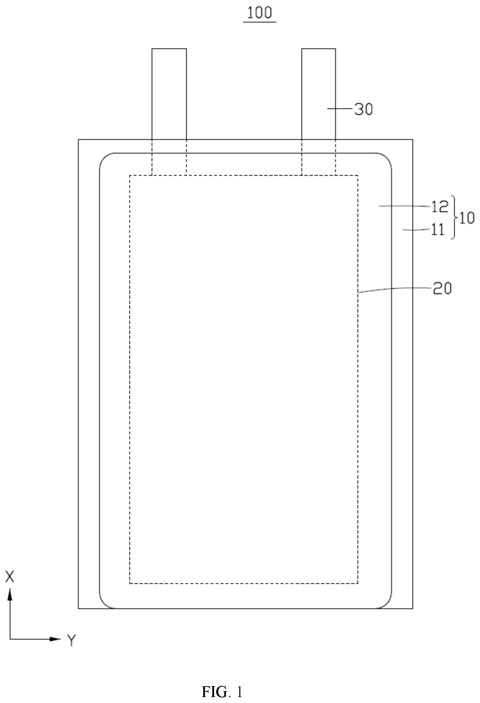

Referring to FIG. 1, an embodiment of this application provides a secondary battery 100, including a housing 10, an electrode assembly 20, an electrolyte solution, and an electrode terminal 30. The electrode assembly 20 and the electrolyte solution are accommodated in the housing 10. The electrode terminal 30 is connected to the electrode assembly 20, and extends out from one side of the housing 10 along a first direction X, so as to connect to an external element. In this application, the first direction X means a length direction of the secondary battery 100. In this embodiment, the number of the electrode terminals 30 is two, which are a positive electrode terminal and a negative electrode terminal, respectively. The two electrode terminals 30 are located on the same side of the secondary battery 100.

Viewed along a third direction Z perpendicular to the first direction X, the secondary battery 100 may assume a regular shape such as a rectangle or a circle, or assume an irregular shape such as a T-shape or an L-shape. In this embodiment, viewed along the third direction Z, the secondary battery 100 is a rectangle. In this application, the third direction X means a thickness direction of the secondary battery 100.

The housing 10 may be a packaging bag sealed with a sealing film (such as an aluminum laminated film or a steel laminated film). In other words, the secondary battery 100 is a pouch cell. Specifically, the housing 10 includes a main body 11 and a sealing portion 12. The main body 11 is provided with an accommodation cavity configured to accommodate the electrode assembly 20. The sealing portion 12 extends from the edge of the main body 11 and is configured to hermetically seal the main body 11. The electrode terminal 30 passes through the sealing portion 12 and extends along the first direction X. In some other embodiments, the housing 10 is a metal housing, such as a steel shell or an aluminum shell.

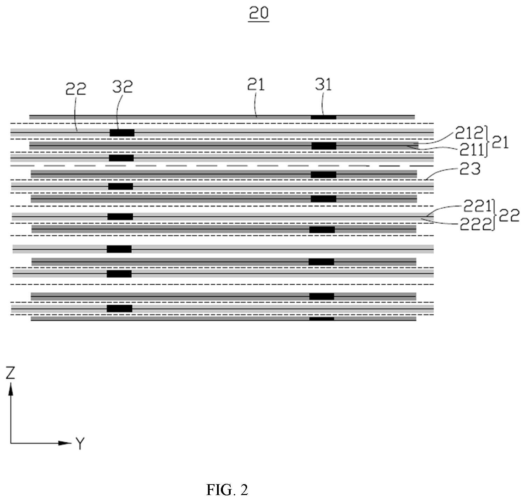

Referring to FIG. 2, the electrode assembly 20 includes a positive electrode plate 21, a negative electrode plate 22, and a separator 23 disposed between the positive electrode plate 21 and the negative electrode plate 22. The positive electrode plate 21, the separator 23, and the negative electrode plate 22 are sequentially stacked along a third direction Z to form a stacked structure. In some other embodiments, the positive electrode plate 21, the separator 23, and the negative electrode plate 22 are stacked along the third direction Z and then wound to form a jelly-roll structure.

The positive electrode plate 21 includes a positive current collector 211 and a positive active layer 212 disposed on at least one surface of the positive current collector 211. The positive current collector 211 contains at least one of Ni, Ti, Cu, Ag, Au, Pt, Fe, Al, or a combination thereof. The positive active layer 212 includes a positive active material. The positive active material may include at least one of lithium cobalt oxide, lithium manganese oxide, lithium nickel oxide, lithium nickel cobalt manganese oxide, lithium iron phosphate, lithium manganese iron phosphate, lithium vanadium phosphate, lithium vanadyl phosphate, a lithium-rich manganese-based material, a lithium nickel cobalt aluminum oxide, or a combination thereof. In some embodiments, the positive active layer 212 further includes a binder, and optionally includes a conductive agent. The binder strengthens the bonding between particles of the active material and the bonding between the active material and the current collector. The binder includes, but is not limited to, polyvinyl alcohol, hydroxypropyl cellulose, diacetyl cellulose, polyvinyl chloride, carboxylated polyvinyl chloride, polyvinyl fluoride, or the like. The conductive agent can improve conductivity of the electrode plate. The conductive agent includes, but is not limited to, graphite, carbon black, acetyl black, metal powder, or the like.

The negative electrode plate 22 includes a negative current collector 221 and a negative active layer 222 disposed on at least one surface of the negative current collector 221. The negative current collector 221 contains at least one of Ni, Ti, Cu, Ag, Au, Pt, Fe, Al, or a combination thereof. The negative active layer 222 includes a negative active material. The negative active material includes one or more of soft carbon, hard carbon, artificial graphite, natural graphite, silicon, a silicon-oxygen compound, a silicon-carbon composite, lithium titanium oxide, or a lithium-alloyable metal. In some embodiments, the negative active layer 222 further includes a binder, and optionally includes a conductive agent. The binder strengthens the bonding between particles of the active material and the bonding between the active material and the current collector. The binder includes, but is not limited to, polyvinyl alcohol, hydroxypropyl cellulose, diacetyl cellulose, polyvinyl chloride, carboxylated polyvinyl chloride, polyvinyl fluoride, or the like. The conductive agent can improve conductivity of the electrode plate. The conductive agent includes, but is not limited to, graphite, carbon black, acetyl black, metal powder, or the like.

Referring to FIG. 1 and FIG. 2, the secondary battery 100 further includes tabs. The tabs include a positive tab 31 and a negative tab 32. The positive tab 31 is connected to the positive current collector 211, and extends out of the electrode assembly 20 along the first direction X, so as to be welded to the corresponding electrode terminal 30. The positive tab 31 may be integrally formed with, or welded to, the positive current collector 211. The negative tab 32 may be integrally formed with, or welded to, the negative current collector 221.

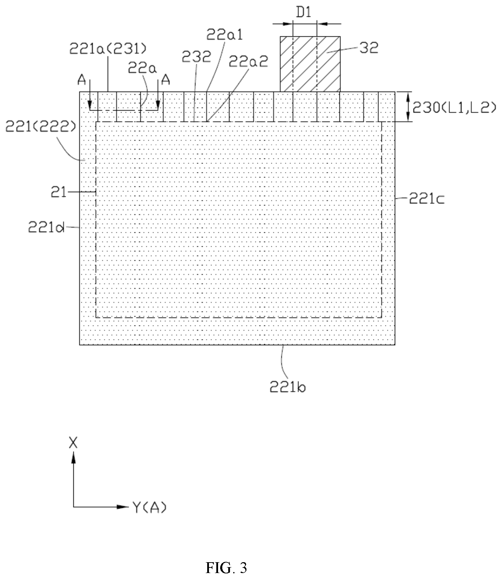

Referring to FIG. 3, the negative current collector 221 includes a first edge 221a located on the same side as the negative tab 32, and a second edge 221b opposite to the first edge 221a in the first direction X. The negative tab 32 extends out of the electrode assembly 20 through the first edge 221a along the first direction X. In the first direction X, the negative active layer 222 includes a first edge region 230 provided with a plurality of first strip-shaped grooves 22a. The first edge region 230 overlaps the first edge 221a, and extends toward the second edge 221b. The first strip-shaped grooves 22a are formed by removing a part of the negative active layer 222. The first strip-shaped grooves 22a reserve space for electrolyte transmission. The electrolyte solution that concentrates around the first edge region 230 flows into the negative active layer 222 through the first strip-shaped grooves 22a, thereby alleviating the problems of electrolyte concentration around the first edge region 230 and impedance unevenness, and in turn, alleviating the lithium plating at the position of the first edge 221a, and improving the cycle performance.

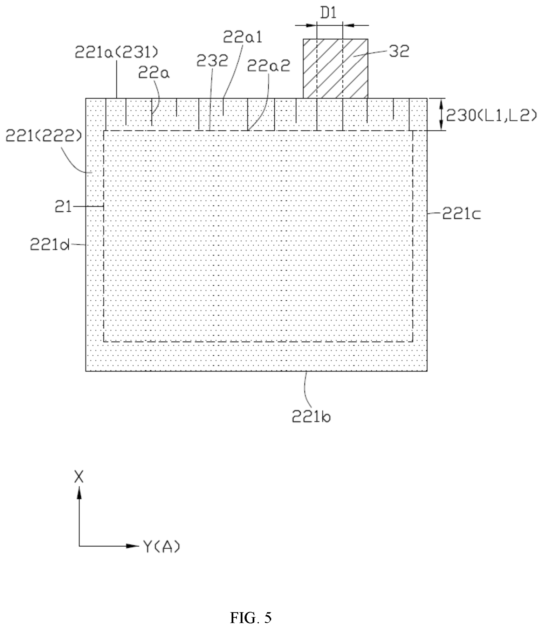

In the first direction X, the first edge region 230 includes a first end portion 231 located on the same side as the first edge 221a, and a second end portion 232 opposite to the first end portion 231. The first end portion 231 overlaps the first edge 221a. In the first direction X, the first strip-shaped groove 22a includes a first end 22a1 located on the same side as the tab, and a second end 22a2 opposite to the first end 22a1. The second end portion 232 of the first edge region 230 overlaps the second end 22a2, farthest from the first edge 221a in the first direction X, in the plurality of first strip-shaped grooves 22a. At least one first strip-shaped groove 22a extends from the first end portion 231 to the second end 22a2. In FIG. 3, the second ends 22a2 of the plurality of first strip-shaped grooves 22a are substantially aligned with each other in a second direction Y perpendicular to the second direction X. The second end portion 232 of the first edge region 230 overlaps the second ends 22a2 of the plurality of first strip-shaped grooves 22a. In FIG. 5, the second ends 22a2 of the first strip-shaped grooves 22a are staggered from each other in the second direction Y. The second end portion 232 of the first edge region 230 overlaps the second end 22a2, farthest from the first edge 221a, in the plurality of first strip-shaped grooves 22a. In this embodiment, the first edge region 230 does not overlap the positive electrode plate 21. In other words, the first edge region 230 is an excess region of the negative electrode plate 22 beyond the positive electrode plate 21 on one side in the first direction X. In another embodiment, viewed along the third direction Z, the first edge region 230 partially overlaps the positive electrode plate 21. In the first direction X, the width of the first edge region 230 is greater than an excess width of the negative electrode plate 22 over the positive electrode plate 21 on one side in the first direction X, thereby more favorably alleviating the lithium plating in the entire excess region of the negative electrode plate 22 beyond the positive electrode plate 21 on one side in the first direction X, and improving the cycle performance.

Along the first direction X, the distance between the first end portion 231 and the second end portion 232 is defined as L1 mm. In other words, the width of the first edge region 230 along the first direction X is L1 mm. In some embodiments, L1 ≥ 1 mm. When L1 falls within the above range, the lithium plating at the position of the first edge 221a can be alleviated. Preferably, L1 ≥ 3 mm, thereby significantly alleviating the lithium plating at the position of the first edge 221a, and alleviating the lithium plating at the position of the main region 240.

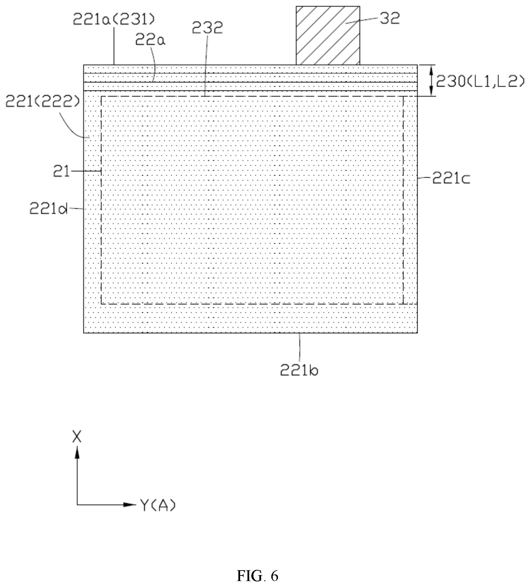

The first strip-shaped groove 22a may be parallel, perpendicular, or inclined to the first edge 221a. FIG. 3 and FIG. 5 show scenarios in which the first strip-shaped grooves 22a are perpendicular to the first edge 221a, where a plurality of first strip-shaped grooves 22a are parallel to each other and extend substantially along the first direction X. FIG. 6 shows a scenario in which the first strip-shaped grooves 22a are parallel to the first edge 221a, where a plurality of first strip-shaped grooves 22a are parallel to each other and extend substantially along the second direction Y.

Along a direction from the first end 22a1 to the second end 22a2 of the first strip-shaped groove 22a, that is, along the extension direction of the first strip-shaped groove 22a, a distance between the first end 22a1 and the second end 22a2 is defined as L2 mm. FIG. 3 shows a scenario in which the first strip-shaped groove 22a extends along the first direction X, indicating that the length of the first strip-shaped groove 22a in the first direction X is L2 mm. In some embodiments, 3 ≤ L2. For example, L2 is 3 mm, 4 mm, 5 mm, 6 mm, 7 mm, 8 mm, 9 mm, 10 mm, 12 mm, 15 mm, 18 mm, 20 mm, or a value falling within a range formed by any two thereof. When L2 falls within the above range, the lithium plating problem is alleviated. In a scenario in which the first strip-shaped groove 22a is perpendicular to the first edge 221a, L2 ≤ L1. In a scenario in which the first strip-shaped groove 22a is inclined to the first edge 221a, L2 may be greater than L1.

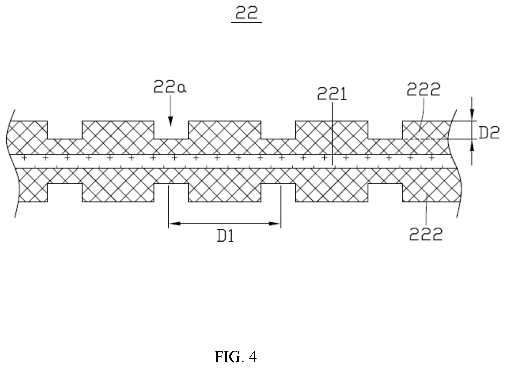

Referring to FIG. 3 and FIG. 4, it is defined that a direction from one first strip-shaped groove 22a to an adjacent first strip-shaped groove 22a as a fourth direction A. In this embodiment, the fourth direction A is parallel to the second direction Y. Viewed along the third direction Z, in the fourth direction A, the spacing between two adjacent first strip-shaped grooves 22a is defined as D1. In this application, the distance between two adjacent first strip-shaped grooves 22a means the distance between center lines of the two adjacent first strip-shaped grooves 22a in the fourth direction A. In some embodiments, 150 µm ≤ D1 ≤ 2500 µm. When D1 < 150 µm, D1 is excessively small, and is hardly practicable as limited by the processing equipment (such as lasers), and gives rise to low production efficiency. In addition, such a value of the spacing reduces the bonding area between the negative electrode plate 22 and the separator 23, reduces the bonding force, and gives rise to a delamination problem. When D1 > 2500 µm, with the area of the negative electrode plate 22 being constant, the number of the first strip-shaped grooves 22a is relatively small, the effect on improving the electrolyte transmission capability is limited, the effect on alleviating the lithium plating is limited, and the effect on improving the cycle performance is limited. Preferably, 200 µm ≤ D1 ≤ 1000 µm, thereby more favorably alleviating the lithium plating, and significantly improving the cycle performance.

Referring to FIG. 4, in the third direction Z, the depth of the first strip-shaped groove 22a is D2. In this application, the depth of the first strip-shaped groove 22a means a distance between the deepest point of the first strip-shaped groove 22a and the surface of the negative active layer 222. In some embodiments, 5 µm ≤ D2 ≤ 25 µm. When D2 < 5 µm, the depth of the strip-shaped groove is excessively small. Therefore, during formation of the strip-shaped groove through etching, the etching is prone to be not enough to run through, thereby impairing the transmission performance of the electrolyte solution, and impairing the cycle performance. In addition, the excessively small value of D2 produces a limited effect on improving the cycle performance. When D2 > 25 µm, the depth of the strip-shaped groove is excessively large, the etching is prone to be excessive and make the negative electrode capacity be less than the positive electrode capacity, thereby causing lithium plating at the position of the strip-shaped groove, and producing a limited effect on improving the cycle performance. It is hereby noted that, in this application, when the energy density remains constant, that is, when the mass loss caused by the active layer removed during formation of the strip-shaped groove remains constant, the appropriate relationship between the depth D2 of the strip-shaped groove and the distance D1 between two adjacent strip-shaped grooves is designed.

Referring to FIG. 3, the negative current collector 221 further includes a third edge 221c and a fourth edge 221d opposite to each other in the second direction Y. In some embodiments, the plurality of first strip-shaped grooves 22a are arranged from the third edge 221c to the fourth edge 221d. In other words, the plurality of first strip-shaped grooves 22a are distributed on the entire negative current collector 221 along the second direction Y, thereby alleviating the lithium plating at the position of the entire first edge 221a in the second direction Y. In some embodiments, a plurality of first strip-shaped grooves 22a are evenly spaced in the first edge region 230.

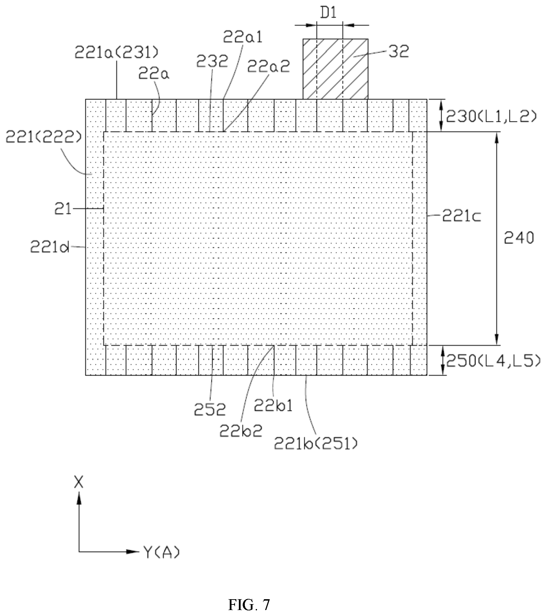

Referring to FIG. 7, the negative active layer 222 further includes a second edge region 250 provided with a plurality of second strip-shaped grooves 22b, and a main region 240 disposed between the first edge region 230 and the second edge region 250 in the first direction X. The second edge region 250 overlaps the second edge 221b, and extends toward the first edge 221a, and is separate from the first edge region 230. The second strip-shaped grooves 22b are formed by removing a part of the negative active layer 222. The second strip-shaped grooves 22b reserve space for electrolyte transmission. The electrolyte solution that concentrates around the second edge region 250 flows into the negative active layer 222 through the second strip-shaped grooves 22b, thereby alleviating the problems of electrolyte concentration around the second edge region 250 and impedance unevenness, and in turn, alleviating the lithium plating at the position of the second edge 221b, and improving the cycle performance.

In the first direction X, the second edge region 250 includes a third end portion 251 located on the same side as the second edge 221b, and a fourth end portion 252 opposite to the third end portion 251. The third end portion 251 overlaps the second edge 221b. In the first direction X, the second strip-shaped groove 22b includes a third end 22b1 located on the same side as the second edge 221b, and a second end 22b2 opposite to the third end 22b1. The fourth end portion 252 of the second edge region 250 overlaps the fourth end 22b2, farthest from the second edge 221b in the first direction X, in the plurality of second strip-shaped grooves 22b. At least one second strip-shaped groove 22b extends from the third end portion 251 to the fourth end portion 252. In this embodiment, the second edge region 250 does not overlap the positive electrode plate 21. In other words, the second edge region 250 is an excess region of the negative electrode plate 22 beyond the positive electrode plate 21 on one side, facing away from the tab, in the first direction X. In another embodiment, viewed along the third direction Z, the second edge region 250 partially overlaps the positive electrode plate 21. In the first direction X, the width of the second edge region 250 is greater than an excess width of the negative electrode plate 22 over the positive electrode plate 21 on one side, facing away from the tab, in the first direction X, thereby more favorably alleviating the lithium plating in the entire excess region of the negative electrode plate 22 beyond the positive electrode plate 21 on one side, facing away from the tab, in the first direction X, and improving the cycle performance.

Along the first direction X, the distance between the third end portion 251 and the fourth end portion 252 is defined as L4 mm. In other words, the width of the second edge region 250 along the first direction X is L4 mm. In some embodiments, L4 ≥ 1 mm. When L4 falls within the above range, the lithium plating at the position of the second edge 221b can be alleviated. Preferably, L4 ≥ 3 mm, thereby significantly alleviating the lithium plating at the position of the second edge 221b, and alleviating the lithium plating at the position of the main region 240.

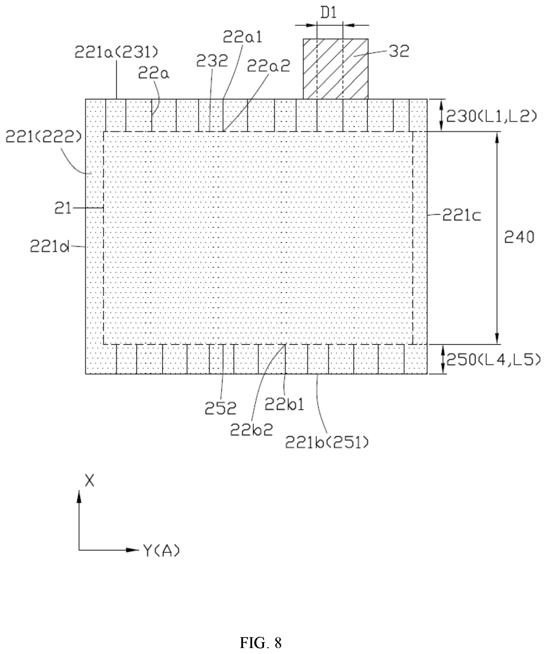

The second strip-shaped groove 22b may be parallel, perpendicular, or inclined to the second edge 221b. FIG. 7 shows a scenario in which the second strip-shaped grooves 22b are perpendicular to the second edge 221b, where a plurality of second strip-shaped grooves 22b are parallel to each other and extend substantially along the first direction X. In some embodiments, a plurality of first strip-shaped grooves 22a correspond to a plurality of second strip-shaped grooves 22b in a one-to-one manner in the first direction X. FIG. 7 shows a scenario in which a plurality of first strip-shaped grooves 22a are aligned with a plurality of second strip-shaped grooves 22b in a one-to-one manner in the first direction X. FIG. 8 shows a scenario in which a plurality of first strip-shaped grooves 22a are staggered from a plurality of second strip-shaped grooves 22b in the first direction X.

Along a direction from the third end 22b1 to the fourth end 22b2 of the second strip-shaped groove 22b, that is, along the extension direction of the second strip-shaped groove 22b, a distance between the third end 22b1 and the fourth end 22b2 is defined as L5 mm. FIG. 7 shows a scenario in which the second strip-shaped groove 22b extends along the first direction X, indicating that the length of the second strip-shaped groove 22b in the first direction X is L5 mm. In some embodiments, 3 ≤ L5 ≤ 20. For example, L5 is 3 mm, 4 mm, 5 mm, 6 mm, 7 mm, 8 mm, 9 mm, 10 mm, 12 mm, 15 mm, 18 mm, 20 mm, or a value falling within a range formed by any two thereof. When L5 falls within the above range, the lithium plating problem is alleviated.

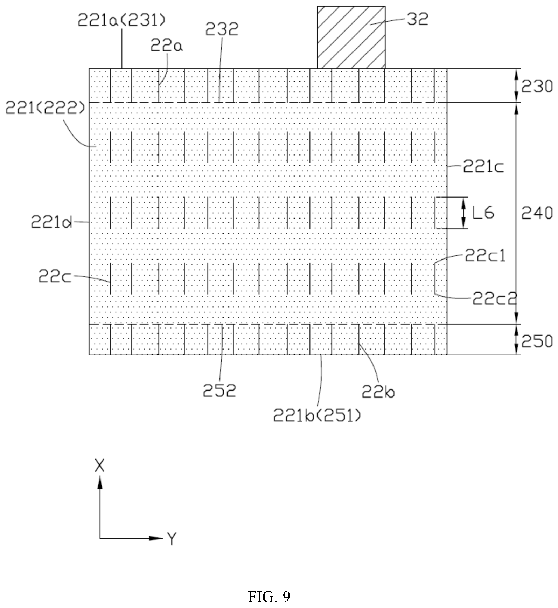

Referring to FIG. 9, in some embodiments, the main region 240 is provided with a plurality of third strip-shaped grooves 22c. The third strip-shaped grooves 22c reserve space for electrolyte transmission. After the electrolyte solution is injected, the electrolyte solution flows through the third strip-shaped grooves 22c and fully infiltrates the main region 240, thereby alleviating the lithium plating at the position of the main region 240.

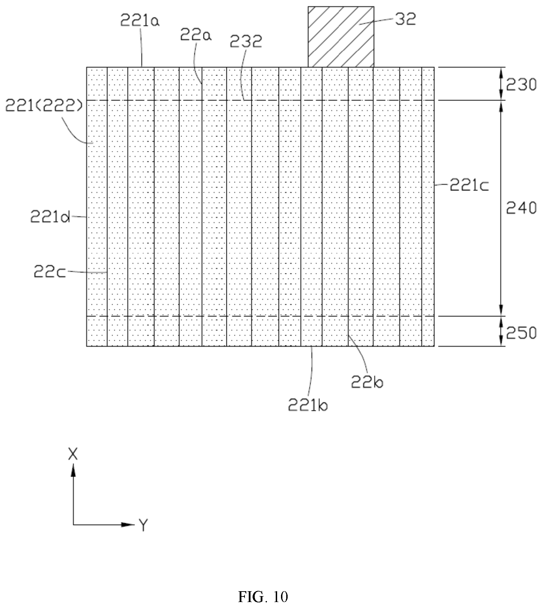

In some embodiments, viewed along the first direction X, each first strip-shaped groove 22a overlaps the corresponding third strip-shaped groove 22c and the corresponding second strip-shaped groove 22b. In this way, the electrolyte solution can flow quickly from the first edge 221a to the second edge 221b conveniently. In some embodiments, in the first direction X, each third strip-shaped groove 22c is separate from the corresponding first strip-shaped groove 22a and the corresponding second strip-shaped groove 22b. Referring to FIG. 10, in another embodiment, each third strip-shaped groove 22c is connected to the corresponding first strip-shaped groove 22a and the corresponding second strip-shaped groove 22b to form a strip-shaped groove that runs through the negative active layer 222 in the first direction X.

In some embodiments, in the first direction X, a plurality of third strip-shaped grooves 22c are divided into a plurality of groups spaced apart. Each group of third strip-shaped grooves 22c is evenly distributed from the third edge 221c to the fourth edge 221d. The third strip-shaped groove 22c includes a fifth end 22c1 located on the same side as the first edge 221a in the first direction X, and a sixth end 22c2 located on the same side as the second edge 221b. The fifth ends 22c1 of each group of third strip-shaped grooves 22c are substantially aligned with each other in the second direction Y, and the sixth ends 22c2 of each group of third strip-shaped grooves 22c are substantially aligned with each other in the second direction Y. FIG. 9 shows a plurality of third strip-shaped grooves 22c divided into three groups spaced apart in the first direction X. The three groups of third strip-shaped grooves 22c are evenly spaced in the first direction X. In another embodiment, the plurality of third strip-shaped grooves 22c may be divided into two groups or more than three groups in the first direction X. The plurality of groups of third strip-shaped grooves 22c are spaced evenly or unevenly in the first direction X. In some embodiments, the spacing between two adjacent groups of third strip-shaped grooves 22c in the second direction Y is 3 to 10 mm. In a direction from the fifth end 22c1 to the sixth end 22c2, the length of the third strip-shaped groove 22c is L6 mm. The length of the third strip-shaped groove 22c may be achieved by adjusting the number of groups of the third strip-shaped grooves 22c and the spacing between two adjacent groups of the third strip-shaped grooves 22c.

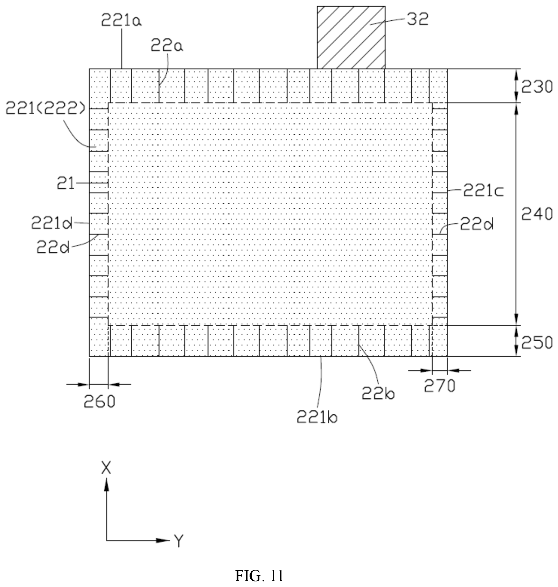

Referring to FIG. 11, the negative active layer 222 further includes a third edge region 260 and a fourth edge region 270 each provided with a plurality of fourth strip-shaped grooves 22d. The third edge region 260 overlaps the third edge 221c, and extends toward the fourth edge 221d along the second direction Y. The fourth edge region 270 overlaps the fourth edge 221d, and extends toward the third edge 221c along the second direction Y. The first edge region 230, the second edge region 250, the third edge region 260, and the fourth edge region 270 are arranged around the main region 240. In this embodiment, viewed along the third direction Z, the third edge region 260 and the fourth edge region 270 do not overlap the positive electrode plate 21. In other words, the third edge region 260 and the fourth edge region 270 are excess regions of the negative electrode plate 22 beyond the positive electrode plate 21 on two sides in the second direction Y respectively. In another embodiment, viewed along the third direction Z, the third edge region 260 and the fourth edge region 270 each partially overlap the positive electrode plate 21. The fourth strip-shaped groove 22d reserves space for electrolyte transmission. The electrolyte solution that concentrates around the third edge region 260 and the fourth edge region 270 flows through the fourth strip-shaped grooves 22d and flows into the negative active layer 222, thereby alleviating the lithium plating at the positions of the third edge 221c and the fourth edge 221d. When the electrode assembly 20 is a stacked structure, a plurality of edge regions provided with strip-shaped grooves may be arranged, thereby alleviating the lithium plating at the positions of different edges of the electrode assembly.

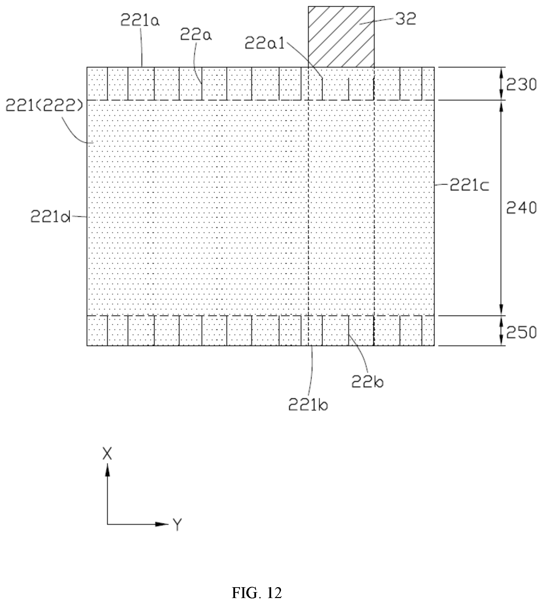

In some embodiments, the negative tab 32 may be integrally formed with the negative current collector 221. Referring to FIG. 12, the first edge region 230 includes a first region 23a corresponding to the negative tab 32 in the first direction X. The first region 23a forms a first projection pattern along the third direction Z on the plane where the negative current collector 221 is located. The negative tab 32 forms a second projection pattern along the third direction Z on the plane where the negative current collector 221 is located. Along the first direction X, two lateral edges of the first projection pattern opposite to each other in the second direction Y are aligned with two lateral edges of the second projection pattern opposite to each other in the second direction Y, respectively. In some embodiments, the distance between the first end 22a1 of the first strip-shaped groove 22a located in the first region 23a and the first edge 221a is 0 to 3 mm. In this way, on the one hand, the first strip-shaped groove 22a tends to run through the negative active layer 222 in the first direction X, thereby well improving the electrolyte infiltration effect, and favorably alleviating the lithium plating. On the other hand, the above arrangement reduces the risk that the etching performed during the processing of the first strip-shaped groove 22a reaches the negative tab 32 and results in a decline in the strength of the negative tab 32.

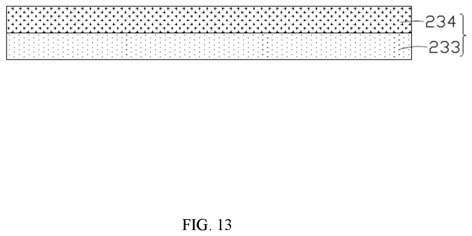

Referring to FIG. 13, in some embodiments, the separator 23 includes a porous base film 233 and an adhesive layer 234 that are stacked together. The adhesive layer 234 is disposed on a surface, facing the negative electrode plate, of the porous base film 233, and is bonded to the active layer of the electrode plate. The adhesive layer 234 is bonded to the negative electrode plate, thereby reducing the risk of delamination and misalignment between the separator 23 and the negative electrode plate. The adhesive layer 234 may be disposed on a surface, facing the positive electrode plate, of the porous electrode film 231, and bonded to the positive active layer, thereby reducing the risk of delamination and misalignment between the separator 23 and the positive electrode plate. In some other embodiments, the separator 23 includes a binder. The separator 23 is bonded to the negative electrode plate and the positive electrode plate.

In some embodiments, the porous base film 233 includes at least one of polyethylene terephthalate, polyethylene, polypropylene, phenolic resin, melamine resin, unsaturated polyester resin, epoxy resin, silicone resin, or polyurethane. In some embodiments, the adhesive layer 234 includes a binder. The binder is a combination of one or more selected from polyvinylidene fluoride, poly(vinylidene fluoride-co-hexafluoropropylene), polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. By selecting different types of binders and/or different mass ratios, this application can adjust the bonding strength of the adhesive layer 234, thereby adjusting the peel strength between the separator 23 and the positive electrode plate 21 as well as the peel strength between the separator 23 and the negative electrode plate 22.

In some embodiments, the peel strength between the separator 23 and the negative electrode plate 22 is greater than or equal to 3 N/m. For example, the peel strength between the separator 23 and the negative electrode plate 22 is 3 N/m, 4 N/m, 5 N/m, 6 N/m, 7 N/m, 8 N/m, or a value falling within a range formed by any two thereof.

In some embodiments, the peel strength between the separator 23 and the positive electrode plate 21 is greater than or equal to 8 N/m. For example, the peel strength between the separator 23 and the positive electrode plate 21 is 8 N/m, 9 N/m, 10 N/m, 11 N/m, 12 N/m, 13 N/m, 14 N/m, 15 N/m, or a value falling within a range formed by any two thereof.

An embodiment of this application further provides an electronic device. The electronic device includes any one of the above-mentioned secondary batteries. The electronic device of this application may be, but is not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, lighting appliance, toy, game console, watch, electric tool, flashlight, camera, large household battery, lithium-ion capacitor, and the like.

The following describes the performance of the secondary battery according to this application with reference to specific embodiments and comparative embodiments.

### Embodiment 1

Preparing a positive electrode plate: Dissolving a positive active material (lithium cobalt oxide), a conductive agent (conductive carbon black), and a binder (polyvinylidene fluoride) at a mass ratio of 97.5 : 1 : 1.5 in an N-methylpyrrolidone solution to form a positive electrode slurry in which the solid content is 75%. Using aluminum foil as a current collector, applying the positive electrode slurry onto a surface of the positive current collector to obtain a positive active layer. Subsequently, performing cold-pressing and cutting to obtain a negative electrode plate.

Preparing a negative electrode plate: Mixing a negative active material (graphite), a conductive agent (conductive carbon black), a thickener (sodium carboxymethyl cellulose), and a binder (styrenebutadiene rubber) at a mass ratio of 97.5 : 1 : 0.5 : 1, adding deionized water as a solvent, and stirring well to obtain a negative electrode slurry in which the solid content is 50 wt%. Using copper foil as a current collector, applying the negative electrode slurry onto a surface of the negative current collector to obtain a negative active layer. Subsequently, performing cold-pressing and cutting to obtain a negative electrode plate. Subsequently, etching the first edge region of the negative active layer by laser etching to form a plurality of first strip-shaped grooves. The structure of the negative electrode plate is shown in FIG. 3. The first strip-shaped grooves extend from the first end portion to the second end portion of the first edge region.

Preparing a separator: Using a polyethylene film as a porous base film, and coating the surface of the porous base film to form an adhesive layer. The peel strength between the separator and the negative electrode plate, and the peel strength between the separator and the positive electrode plate, are 10 N/m.

Preparing an electrolyte solution: Mixing ethylene carbonate (EC), diethyl carbonate (DEC), propylene carbonate (PC), propyl propionate (PP, and vinylene carbonate (VC) at a mass ratio of 20: 30: 20: 28: 2 to obtain an organic solvent, and then mixing a fully dried lithium salt LiPF₆ with the organic solvent at a mass ratio of 8: 92 to obtain an electrolyte solution.

Preparing a lithium-ion battery: Stacking the positive electrode plate, the separator, and the negative electrode plate sequentially such that the separator is located between the positive electrode plate and the negative electrode plate to form an electrode assembly. Putting the electrode assembly into an aluminum laminated film packaging bag, and hot-pressing the packaging bag at a preset pressure to bond the packaging bag. Performing electrolyte injection and chemical formation to obtain an lithium-ion battery.

### Embodiments 2 to 18 and Comparative Embodiment 2

Different from Embodiment 1 in at least one of: the width L1 of the first edge region provided with the first strip-shaped grooves in the first direction X, the spacing D1 between two adjacent first strip-shaped grooves, the depth D2 of the first strip-shaped groove, or the length L2 of the first strip-shaped groove.

### Embodiments 19 to 24

Different from Embodiment 1 in that a plurality of second strip-shaped grooves are etched on the negative active layer to form a second edge region, and the structure of the negative electrode plate is shown in FIG. 7. The second strip-shaped grooves extend from the third end portion to the fourth end portion of the second edge region.

### Embodiment 25

Different from Embodiment 1 in that the main region of the negative active layer is etched to form a plurality of third strip-shaped grooves, and the structure of the negative electrode plate is shown in FIG. 9. The plurality of third strip-shaped grooves are divided into three groups evenly spaced in the first direction. The length of the third strip-shaped groove is 10 mm.

### Comparative Embodiment 1

Different from Embodiment 1 in that no strip-shaped groove is etched on the negative active layer.

It is hereby noted that in each embodiment and comparative embodiment, the width of the negative electrode plate in the first direction is 86 mm, and the mass loss caused by the active layer removed during formation of the strip-shaped grooves is constant 1.5 wt%.

The following describes the test method of each parameter in this application.

### (1) Measuring the distance D1 between two adjacent first strip-shaped grooves and the depth D2 of the first strip-shaped groove

Scanning the cross-section of the negative electrode plate by using a charge-coupled device (CCD), and measuring the distance between two adjacent first strip-shaped grooves, and the depth of the first strip-shaped groove.

### (2) Testing the cycle capacity retention rate

Charging a lithium-ion battery at 25 °C according to the following charging steps:
(1) Charging the battery at a constant current of 1.65C until the voltage reaches 4.10 V, and then charging the battery at a constant voltage until a cut-off current of 1.55C.
(2) Charging the battery at a constant current of 1.55C until the voltage reaches 4.20 V, and then charging the battery at a constant voltage until a cut-off current of 1.4C.
(3) Charging the battery at a constant current of 1.4C until the voltage reaches 4.24 V, and then charging the battery at a constant voltage until a cut-off current of 1.1C.
(4) Charging the battery at a constant current of 1.1C until the voltage reaches 4.27 V, and then charging the battery at a constant voltage until a cut-off current of 0.7C.
(5) Charging the battery at a constant current of 0.7C until the voltage reaches 4.30 V, and then charging the battery at a constant voltage until a cut-off current of 0.4C.
(6) Charging the battery at a constant current of 0.4C until the voltage reaches 4.5 V, and then charging the battery at a constant voltage until a cut-off current of C/40.

The above charge-and-discharge process is one cycle. Recording the discharge capacity at the end of the first cycle as an initial discharge capacity. Repeating the above charge-and-discharge process for 1000 cycles, and recording the discharge capacity at the end of the 1000^{th} cycle as a discharge capacity of the cycled battery. Capacity retention rate = discharge capacity of the cycled battery/initial discharge capacity × 100%.

### (3) Lithium plating test

Repeating the above charge-and-discharge process for 10 cycles, and then disassembling the battery in a fully charged state to obtain a negative electrode plate. Observing the lithium plating status at the interface of the negative electrode plate.

Repeating the above charge-and-discharge process for 1000 cycles, and then disassembling the battery in a fully charged state to obtain a negative electrode plate. Determining the ratio of the area of lithium plating regions of the negative electrode plate to the area of the main region of the negative electrode plate.

### (4) Testing the peel strength

The peel strength between the separator and the positive or negative electrode plate is measured by use of a GoTech tensile machine with reference to the standard GB/T 2792-2014 *Measurement of Peel Adhesion Properties for Adhesive Tapes*. The test process is as follows: Discharging the secondary battery until the voltage reaches 3.0 V, and then disassembling the secondary battery, taking out the separator and the electrode plates (positive electrode plate or negative electrode plate) bonded to the separator as a whole, and wiping off the electrolyte solution on the surface by using dust-free paper. Subsequently, cutting the separate and the electrode plate into specimens of 10 mm × 30 mm in size. Bonding the side, close to the electrode assembly, of the specimen onto a steel sheet by use of double-sided tape (Nitto 5000NS) along the length direction of the specimen, where the bonding length is not less than 10 mm. Fixing the steel sheet to a corresponding position of a GoTech tensile machine, and pulling up the other end of the specimen, where the other end is not bonded to the separator. Putting the specimen into a grip to clamp the specimen. Leaving the pulled-up part of the specimen to be at an 180° angle to the steel sheet in space. Pulling the specimen at a speed of 5±0.2 mm/s through the grip. Ultimately, recording the average of tensile forces in a steady region as the peel strength between the separator and the electrode plate, denoted as F, in units of N/m.

Table 1 shows parameters and evaluation results of embodiments and comparative embodiments. In Table 1, L4 is the width of the second edge region in the first direction, L6 is the total length of the third strip-shaped groove in the first direction, and the lithium plating area ratio means a ratio of the lithium plating area to the area of the main body of the negative electrode plate.

**Table 1**

| | L1 (mm) | L2 (mm) | D1 (µm) | D2 (µm) | L4 (mm) | L6 (mm) | Capacity retention rate | Lithium plating status at the edge | Lithium plating area ratio |
|---|---|---|---|---|---|---|---|---|---|
| Comparative Embodiment 1 | / | / | / | / | / | / | 56% | Yes | 48% |
| Comparative Embodiment 2 | 0.8 | 0.8 | 500 | 8.7 | / | / | 62% | Yes | 42% |
| Embodiment 1 | 1 | 1 | 500 | 8.7 | / | / | 64% | Yes | 36% |
| Embodiment 2 | 2 | 2 | 500 | 8.7 | / | / | 78% | None | 20% |
| Embodiment 3 | 3 | 3 | 500 | 8.7 | / | / | 82% | None | 15% |
| Embodiment 4 | 5 | 5 | 500 | 8.7 | / | / | 83% | None | 14% |
| Embodiment 5 | 10 | 10 | 500 | 8.7 | / | / | 86% | None | 12% |
| Embodiment 6 | 20 | 20 | 500 | 8.7 | / | / | 90% | None | 8% |
| Embodiment 7 | 40 | 40 | 500 | 8.7 | / | / | 91% | None | 3% |
| Embodiment 8 | 60 | 60 | 500 | 8.7 | | | 92% | None | 1% |
| Embodiment 9 | 86 | 86 | 500 | 8.7 | / | / | 93% | None | 0% |
| Embodiment 10 | 10 | 13 | 500 | 8.7 | / | / | 86% | None | 12% |
| Embodiment 11 | 10 | 10 | 150 | 3 | / | / | 78% | None | 18% |
| Embodiment 12 | 10 | 10 | 200 | 5 | / | / | 82% | None | 15% |
| Embodiment 13 | 10 | 10 | 300 | 6.7 | / | / | 84% | None | 15% |
| Embodiment 14 | 10 | 10 | 800 | 11.5 | / | / | 85% | None | 10% |
| Embodiment 15 | 10 | 10 | 1000 | 13.6 | / | / | 83% | None | 14% |
| Embodiment 16 | 10 | 10 | 1700 | 20.7 | / | / | 81% | None | 15% |
| Embodiment 17 | 10 | 10 | 2130 | 25.0 | / | / | 80% | None | 16% |
| Embodiment 18 | 10 | 10 | 2500 | 27.0 | / | / | 74% | None | 20% |
| Embodiment 19 | 10 | 10 | 500 | 8.7 | 1 | / | 86% | None | 12% |
| Embodiment 20 | 10 | 10 | 500 | 8.7 | 2 | / | 87% | None | 10% |
| Embodiment 21 | 10 | 10 | 500 | 8.7 | 3 | / | 88% | None | 9% |
| Embodiment 22 | 10 | 10 | 500 | 8.7 | 5 | / | 89% | None | 10% |
| Embodiment 23 | 10 | 10 | 500 | 8.7 | 10 | / | 90% | None | 6% |
| Embodiment 24 | 10 | 10 | 500 | 8.7 | 20 | / | 90% | None | 4% |
| Embodiment 24 | 10 | 10 | 500 | 8.7 | 40 | / | 91% | None | 3% |
| Embodiment 25 | 10 | 10 | 500 | 8.7 | 10 | 10×3 | 90% | None | 2% |
| Embodiment 26 | 86 | 86 | 500 | 8.7 | / | / | 92% | None | 2% |

As can be seen from Embodiments 1 to 26 versus Comparative Embodiments 1 to 2, when the first edge region provided with a plurality of first strip-shaped grooves is arranged and the width of the first edge region is greater than or equal to 1 mm, the lithium plating can be alleviated significantly, and the cycle performance can be improved. In Comparative Embodiment 1, no strip-shaped grooves are provided, so that the lithium plating phenomenon is the most severe. In Comparative Embodiment 2, the width of the first edge region provided with the first strip-shaped grooves is less than 1 mm, which is excessively small, so that the effect on alleviating the lithium plating at the position of the first edge is limited, and lithium plating occurs at the first edge. In Embodiments 1 to 10, the width of the first edge region is greater than or equal to 3 mm, so that no lithium plating occurs at the edge, the lithium plating area is smaller, the cycle capacity retention rate is higher, and the cycle performance is improved more effectively.

As can be seen from Embodiments 11 to 18, when 150 µm < D1 ≤ 2500 µm, and/or 5 µm < D2 ≤ 25 µm, no lithium plating occurs at the edge, the cycle capacity retention rate is relatively high, and the lithium plating area is relatively small. In Embodiments 12 to 15, when 200 µm < D1 ≤ 1000 µm, the cycle capacity retention rate reaches 82% or above, the lithium plating area ratio is reduced to 15% or lower, and the cycle performance is improved more effectively.

As can be seen from Embodiment 5 and Embodiments 19 to 24, the second edge region provided with a plurality of second strip-shaped grooves increases the cycle capacity retention rate, and reduces the lithium plating area. In Embodiments 19 to 24, the width of the second edge region is greater than or equal to 1 mm, so that no lithium plating occurs at the edge, the cycle capacity retention rate reaches 86% or above, and the lithium plating area ratio is reduced to 12% or lower.

As can be seen from Embodiment 23 and Embodiment 25, the main region is provided with a plurality of third strip-shaped grooves, and the lithium plating area ratio is reduced because the third strip-shaped grooves alleviate the lithium plating in the main region.

Disclosed above are merely preferred embodiments of this application that are in no way construed as any limitation on the scope of rights of this application. Therefore, any equivalent variations made based on the claims of this application still fall within the scope covered by this application.

## Claims

1. A secondary battery, comprising an electrode assembly and a tab, wherein the electrode assembly comprises a negative electrode plate, the negative electrode plate comprises a negative current collector and a negative active layer disposed on at least one surface of the negative current collector, **characterized in that** the negative current collector comprises a first edge and a second edge opposite to each other in a first direction; the tab extends out of the electrode assembly through the first edge along the first direction; the negative active layer comprises a first edge region provided with a plurality of first strip-shaped grooves; the first edge region covers the first edge and extends toward the second edge; in the first direction, the first edge region comprises a first end portion located at the first edge and a second end portion opposite to the first end portion; at least one of the first strip-shaped grooves extends from the first end portion to the second end portion; and a width of the first edge region is greater than or equal to 1 mm.

2. The secondary battery according to claim 1, **characterized in that**, in the first direction, the width of the first edge region is greater than or equal to 3 mm.

3. The secondary battery according to any one of claims 1 to 2, **characterized in that** the negative active layer further comprises a second edge region provided with a plurality of second strip-shaped grooves; in the first direction, the second edge region covers the second edge and is separate from the first edge region; the second edge region comprises a third end portion located at the second edge and a fourth end portion opposite to the third end portion; at least one of the second strip-shaped grooves extends from the third end portion to the fourth end portion; and a width of the second edge region is greater than or equal to 1 mm.

4. The secondary battery according to claim 3, **characterized in that**, in the first direction, the negative active layer further comprises a main region connected between the first edge region and the second edge region, the main region is provided with a plurality of third strip-shaped grooves, and each of the third strip-shaped grooves is separate from a corresponding first strip-shaped groove and a corresponding second strip-shaped groove.

5. The secondary battery according to claim 4, **characterized in that**, in the first direction, the plurality of third strip-shaped grooves are divided into a plurality of groups spaced apart.

6. The secondary battery according to claim 4, **characterized in that** the negative current collector comprises a third edge and a fourth edge opposite to each other in a second direction perpendicular to the first direction; the negative active layer further comprises a third edge region and a fourth edge region each provided with a plurality of fourth strip-shaped grooves; in the second direction, the third edge region covers the third edge, and the fourth edge region covers the fourth edge; and the first edge region, the second edge region, the third edge region, and the fourth edge region are arranged around the main region.

7. The secondary battery according to any one of claims 1 to 6, **characterized in that** the tab is integrally formed with the negative current collector; the first edge region comprises a first region corresponding to the tab in the first direction; the first strip-shaped groove comprises a first end located on a same side as the tab in the first direction; and in the first direction, a distance between the first end of the first strip-shaped groove located in the first region and the first edge is 0 to 3 mm.

8. The secondary battery according to claim 1, **characterized in that** the negative current collector comprises a third edge and a fourth edge opposite to each other in a second direction perpendicular to the first direction, and the plurality of first strip-shaped grooves are arranged from the third edge to the fourth edge.

9. The secondary battery according to any one of claims 1 to 8, **characterized in that** a spacing between two adjacent first strip-shaped grooves is D1, and a depth of the first strip-shaped groove is D2, satisfying: 150 µm ≤ D1 ≤ 2500 µm and/or 5 µm ≤ D2 ≤ 25 µm.

10. The secondary battery according to claim 9, **characterized in that** 200 µm ≤ D1 ≤ 1000 µm.

11. The secondary battery according to any one of claims 1 to 10, **characterized in that** the electrode assembly further comprises a separator and a positive electrode plate, the separator is disposed between the negative electrode plate and the positive electrode plate, a peel strength between the separator and the positive electrode plate is greater than or equal to 3 N/m, and a peel strength between the separator and the negative electrode plate is greater than or equal to 8 N/m.

12. The secondary battery according to any one of claims 1 to 11, **characterized in that** the first strip-shaped groove is perpendicular or inclined to the first edge.

13. The secondary battery according to claim 1, **characterized in that** the electrode assembly further comprises a positive electrode plate, and in the first direction, the width of the first edge region is greater than an excess width of the negative electrode plate over the positive electrode plate on one side in the first direction.

14. An electronic device, comprising the secondary battery according to any one of claims 1 to 13.
